# EUROPEAN PATENT SPECIFICATION

(11) **EP 1 733 383 B1**
(45) Date of publication and mention of the grant of the patent: **15.04.2009**
(21) Application number: 05709048.2
(22) Date of filing: 21.03.2005
(51) Int. Cl.: G10L 15/22, G10L 15/26

(54) **A METHOD FOR DRIVING MULTIPLE APPLICATIONS AND A DIALOG MANAGEMENT SYSTEM**
VERFAHREN ZUR ANSTEUERNG MEHRERER ANWENDUNGEN UND DIALOGVERWALTUNGSSYSTEM
PROCEDE SERVANT A COMMANDER DES APPLICATIONS MULTIPLES ET SYSTEME DE GESTION DE DIALOGUE

(30) Priority: 29.03.2004 EP 04101295
(43) Date of publication of application: 20.12.2006
(73) Proprietor: Philips Intellectual Property & Standards GmbH, 20099 Hamburg (DE); Koninklijke Philips Electronics N.V., 5621 BA Eindhoven (NL)
(72) Inventor: PORTELE, Thomas c/o Philips Int. Prop.& St. GmbH;, 52066 Aachen (DE); STREEFKERK, Barbertje c/o Philips Int.P.&St.GmbH;, 52066 Aachen (DE); TE VRUGT, Jürgen c/o Philips Int. Prop.& St. GmbH;, 52066 Aachen (DE)
(74) Representative: Volmer, Georg
(86) International application number: PCT/IB2005/050956
(87) International publication number: WO 2005/093715

(56) References cited:
- US-A1- 2003 098 892
- US-B1- 6 513 009
- BREWSTER S: "The design of sonically-enhanced widgets" INTERACTING WITH COMPUTERS ELSEVIER UK, vol. 11, no. 2, 15 December 1998 (1998-12-15), pages 211-235, XP002334092 ISSN: 0953-5438
- GAVER AND SMITH: "Auditory icons in large-scale collaborative environments" HUMAN-COMPUTER INTERACTION - INTERACT 90 D. DIAPER ET AL. (EDITORS) ELSEVIER SCIENCE PUBLISHERS B.V. (NORTH HOLLAND), 1990, XP008049217
- SAWHNEY N ET AL: "NOMADIC RADIO: SCALEABLE AND CONTEXUAL NOTIFICATION FOR WEARABLE AUDIO MESSAGING" CHI '99 CONFERENCE PROCEEDINGS HUMAN FACTORS IN COMPUTING SYSTEMS. PITTSBURGH, PA; NEW YORK, NY : ACM, US, 15 May 1999 (1999-05-15), pages 96-103, XP000894208 ISBN: 0-201-48559-1

## Description

This invention relates in general to a method for driving multiple applications by a common, at least partially speech-based, dialog management system and to a dialog management system for driving multiple applications.

Recent developments in the area of man-machine interfaces have led to widespread use of technical devices or applications which are managed or driven by means of a dialog between an application and the user of the application. Most dialog management systems are based on the display of visual information and manual interaction on the part of the user. For instance, a user can enter into a dialog or dialog flow with a personal digital assistant in order to plan appointments or read incoming mails. The dialog can be carried out by the dialog management system issuing prompts to which the user responds by means of a pen or keyboard input. Such an application can be requested by the user to report events which are occurring or which will occur in the near future. For example, the personal digital assistant can remind the user of an upcoming appointment or important date. The reminder might be graphically presented on a display, and accompanied by an audible reminder such a beep, ping or similar artificial sound, to attract the user's attention and remind him look at the display to see the message or reminder conveyed by the application. The same type of beep or ping might be used as a general attention-getting device, or several different types of sound might be used to indicate different types of events. Such a beep is commonly referred to in a play of words as an "earcon", being the audible equivalent of an icon.

As long as such a dialog is carried out between the user and only one application, it is not particularly difficult to remember which earcon or beep is associated with which event. However, if the dialog management system is managing the dialog between a user and a number of applications, it can become quite confusing since the sounds used to indicate the various types of events are generally limited to beeps and other artificial sounding electronic noises. The user might be confused and mistake one type of sound for another, thereby misinterpreting the dialog flow. The paper "The design of sonically enhanced widgets" by Stephen Brewster, Glasgow Interactive Systems Group , Department of Comuting Science, University of Glasgow, describes the use of earcons to provide a user with distinct audible feedback when interacting with more than one application. US 2003/0098892 describes a mobile device having a small display in which different icons are shown in the display in conjunction with audible icons to emphasise their relative relevance in the display.

An at least partially speech-based dialog management system however allows a user to enter into a one-way or two-way spoken dialog with an application. The user can issue spoken commands and receive visual and/or audible feedback from the dialog system. One such example might be a home electronics management system, where the user issues spoken commands to activate a device e.g. the video recorder. Another example might be the operation of a navigation device or another device in a vehicle in which the user asks questions of or directs commands at the device, which gives a response or asks a question in return. More advanced dialog management systems can issue spoken prompts and interpret spoken user input. For example, if the user wishes to check the status of his electronic mailbox, he might say "Check my mailbox", and the dialog management system, after forwarding the necessary commands to the application and interpreting the result reported back, might reply "You've got mail" or "Mailbox is empty" as appropriate. US 6,513,009 B1 describes a system in which distinct voices are used to supply synthesised spoken feedback to a user. The user can identify the application form which the feedback is originating on the basis of the voice characteristics. However, such spoken feedback can be irritating, even when limited to terse phrases, especially if the dialog management system is driving a number of applications simultaneously. For example, if the dialog management system is controlling the dialog between a personal digital assistant, a personal computer, a telephone, a home entertainment system and a news and weather service, the user might be continually bombarded with speech feedback like "Incoming call from Mr. So-and-so", "Weather is set to stay fine", "The match between Bayern München and Real Madrid is due to start in 5 minutes on channel XYZ - shall I record it?", "Check-up due at dentist in the next two weeks - do you want an appointment?" and "Internet connection timeout after 5 minutes", etc. etc. The user might be eventually driven to distraction by the volume of messages being output, even though the messages are relevant and the information has been specifically requested.

An attempt at providing a dialog management system which informs the user of the status of an application via auditory icons as an accompaniment to speech feedback has been made in "Contextual Awareness, Messaging and Communication in Nomadic Audio Environments" from Nitin Sawnhey, M. SC. Thesis, Massachusetts Institute of Technology, 1998. This draft describes a portable device which is able to interface to a remote server. The status of one or more programs active on the server can be reported by the portable audio device, typically worn on the user's lapel. This device is limited to receiving messages only from different programs running on this remote server and to monitoring the activity of these programs - all of a similar nature -, so that these can in effect be regarded as a single application. Actual driving of numerous separate applications, even of differing natures, by a common dialog system wherein the user can not only monitor but also control these different applications, is not foreseen in this draft.

Therefore, an object of the present invention is to provide an easy and inexpensive method for ensuring comfortable and uncomplicated distinction by the user between different applications with which he is interacting using a common dialog management system and in particular to ensure that the user will not issue a command intended for one application to another by mistake

To this end, the present invention provides a method for driving numerous applications by a common dialog management system where a unique set of auditory icons is assigned to each application, and where the common dialog management system informs a user of the status of an application by audible playback, at a specific point in a dialog flow, of a relevant auditory icon selected from among the unique set of auditory icons of the application, and wherein an application submits a set of auditory icons and associated instructions concerning the use thereof to the dialog management system, and/or the dialog management system supplies an application with a unique set of auditory icons by modifying non-unique auditory icons in a set of auditory icons of the application and/or choosing unique auditory icons for the application from a collection of auditory icons.

An "auditory icon" can be any type of sound or dedicated sound chunk used to describe a particular type of feedback from the application, such as an artificial short sound chunk (earcon) or a sound chunk resembling a real-world sound, such as a recording of a relevant sound.

A dialog management system according to the invention comprises an input detection arrangement for detecting user input to the system, a sound output arrangement for outputting audible prompts, a core dialog engine for coordinating a dialog flow by interpreting user input and generating output prompts, an application interface for communication between the dialog management system and the applications, a source of unique sets of auditory icons assigned to the applications, and an auditory icon management unit for selecting relevant auditory icons from the unique sets of auditory icons corresponding to the applications for playback at appropriate points in the dialog flow. The dialog management system is realised to obtain a set of auditory icons and associated instructions concerning the use thereof from an application and/or to supply an application with a unique set of auditory icons by modifying non-unique auditory icons in a set of auditory icons of the application and/or by choosing unique auditory icons for the application from a collection of auditory icons.

Advantageously, the dialog management system according to the invention is able to provide an application with any auditory icons which it might require. For example, the dialog management system might choose a set of suitable auditory icons from a selection available, and assign these to the application. Furthermore, it might be that two or more applications have similar or identical auditory icons in their repertoire. To avoid any confusion on the part of the user that might arise should both applications be simultaneously active, these auditory icons might be modified by the dialog management system in some way, or might be replaced by different, equally suitable auditory icons.

Using a dialog management system according to the present invention to drive numerous applications, the user can easily distinguish between the different types of feedback from the different applications. Since each type of feedback reported back from an application is accompanied by a unique meaningful audible sound, easily associated by the user with the corresponding application, the user does not run the risk of becoming confused, and will not mistake one type of feedback with another. The unique auditory icons keep the user constantly informed about the application with which he is currently interacting. This ensures that the user cannot issue a command intended for one application to another by mistake. The invention is therefore particularly advantageous for a exclusively speech-controlled dialog management system, or in an application where it is impracticable or dangerous for the user to have to look at a screen to follow the dialog, such as an automobile navigation system where the user should not be distracted from concentrating on the traffic, or a computer-aided surgical procedure, where the surgeon must remain focussed on the operative procedure taking place while being constantly informed of the status of the procedure. The invention therefore allows numerous separate applications, even of differing natures, to be driven by a common dialog system and to be monitored and controlled by a user.

The dependent claims disclose particularly advantageous embodiments and features of the invention whereby the system could be further developed according to the features of the method claims.

A dialog management system according to the present invention might be incorporated in an already existing device such as a PC, television, video recorder etc., and might inform the user of the status of various applications running in a home and/or office environment. In a preferred embodiment, the dialog management system is implemented, as a stand-alone device, with a physical aspect such as that of a robot or preferably a human. The dialog system might be realised as a dedicated device as described, for example, in DE 10249060 A1, constructed in such a way that a moveable part with schematic facial features can turn to face the user, giving the impression that the device is listening to the user. Such a dialog management system might even be constructed in such a fashion that it can accompany the user as he moves from room to room. The interfaces between the dialog management system and the undividual applications may be realised by means of cables. Preferably, the interfaces and realised in a wireless manner, such an unfra-red, bluetooth, etc., so thatthe dialog management system remains essentially moble, and in not restricted to being positioned in the vicinity of the applications which it is used to drive. If the wireless interfaces have sufficient reach, the dialog management system can easily be used for controlling numerous applications for devices located in different rooms of a building, such as an office block or private house. The interfaces between the dialog management system and the individual applications are preferably managed in a dedicated application interface unit. Here, the communication between the applications and the dialog management system is managed by forwarding to each application any commands or instructions interpreted from the spoken user input, and by receiving from an application any feedback intended for the user. The application interface unit can deal with several applications in a parallel manner.

An application driven by the dialog management system might be a program running as software on a personal computer, a network, or any electronic device controlled by a processor or simple circuitry, such as a heating system for a household, a microwave oven, etc.. Equally, an application can be understood to control a mechanical or physical device or object not ordinarily controlled by a processor. Such a device or object might be a purely mechanical device or object such as, for example, a letterbox. Such an object might be provided with appropriate sensors and an interface to the dialog management system, so that the dialog management system is informed when, for example, letters are dropped into the letterbox. This event might then be communicated to the user by an appropriate auditory icon, such as a post horn sound. The user of the dialog management system can thus tell whether he has received a postal delivery without having to actually go and see. Such an application of a dialog management system according to the invention might be particularly advantageous for a user living in a high-rise apartment block, or for a physically disabled user. A heating system, such as the household type of heating system that can be re-programmed by the user according to season, might be controlled by dialog management system according to the invention. The user might avail of the dialog management system to easily reprogram the heating system by means of spoken commands before going on vacation, thus being spared the necessity of a time-consuming manual reprogramming. The dialog management system can report the status of the heating system to the user, whereby the relevant prompts may be accompanied by appropriate auditory icons. An application can also be understood to be an essentially electronic device such as an intercom or telephone. Here, the dialog management system could be connected to the intercom or telephone by means of a suitable interface, and can assist the user in dealing with a visitor or an incoming call by informing the user of the event by emitting an appropriate auditory icon - for example the sound of knocking on wood for a visitor at the door - without the user actually having to first open the door or pick up the telephone receiver.

User input to the dialog management system can be vocal, whereby spoken commands or comments of the user are recorded by means of the input detection arrangement, for example, a microphone. The input detection arrangement might - if the dialog management system is not exclusively speech-controlled - additionally comprise a keyboard, mouse, or a number of buttons by means of which the user can input commands to the system. An advanced input detection arrangement might even feature cameras for sensing movement of the user, so that the user might communicate with the dialog management system by means of gestures, for example by waving his hand or shaking his head. The dialog management system interprets the user input, determines the application for which the user input is intended, and converts the user input to a form suitable for understanding by that application.

Spoken user input is analysed for content, and feedback from the application is converted to an output prompt by a core dialog engine. The dialog management system communicates with the user by means of a sound output arrangement, preferably one or more loudspeakers, for outputting audible prompts which are generated by the core dialog engine in response to feedback from an application.

The core dialog engine comprises several units or modules for performing the usual steps of speech recognition and speech synthesis, such as an language understanding unit, a speech synthesis unit etc. A dialog control unit interprets the text identified by the language understanding unit, identifies the application for which it is intended, and converts it into a form suitable for processing by that application. Furthermore, the dialog control unit might analyse incoming feedback from an application and forward a suitable auditory icon, chosen from the unique set of auditory icons associated with that application, to the output sound arrangement. The audible prompts comprise auditory icons, which are understood to be dedicated sound chunks describing a particular type of feedback from an application.

The auditory icons are used by the application to indicate any event during the dialog flow, or that a particular event has occurred - probably of interest to the user - such as the arrival of an electronic mail. Furthermore, the auditory icons might be used to indicate that an application is awaiting a user response, for example if the user has overheard a prompt. Auditory icons are preferably used to indicate any change in operational status of an application about which the user should be informed.

An application might feature a complete set of auditory icons for use in any situation where the application can give the user feedback concerning its status or activities. As already indicated, an application might supply the dialog management system with a copy of its set of auditory icons, along with any associated instructions or accompanying information regarding the suitable use or playback of each auditory icon. These icons are managed by the dialog management system in an auditory icon management unit, which keeps track of which auditory icon is assigned to which application, and the type of feedback for which each auditory icon is to be used. The dialog management system might acquire the complete set of auditory icons at the outset of a dialog flow between the user and the application, or upon a first activation or installation of the application, and the auditory icon management unit might store all information regarding the auditory icons and their associated instructions in a local memory for use at a later point in time. In this way, the dialog management system ensures that it has any auditory icon that it might require for providing appropriate feedback to the user, regardless of what might arise during the dialog flow.

Alternatively, the dialog management system might first request an application to supply only the relevant identifying information for each auditory icon in its set, such as a unique descriptive name or number, and any usage instructions associated with the different auditory icons. The dialog management system might then request each auditory icon only as the necessity arises, in order to reduce memory costs. The dialog management system might equally decide, on the basis of the preceding dialog flow, which type of auditory icon it might require for a particular application in the near future, and it might request this auditory icon in advance from the application.

For an application that does not avail of a pre-defined set of auditory icons, the dialog management system can provide an appropriate set. To this end, the dialog management system might be able to determine the nature of the application and decide on a suitable set of auditory icons, or the user might choose to define the auditory icons himself. He might do this by locating a sound chunk in digital form, for example by downloading from the internet or extracting a suitable sound chunk from a soundtrack or song, or he might record a sound chunk using a recording apparatus and communicate the recording to the dialog management system. For example, he might record or obtain a recording of a Formula One racing car being driven at speed, transfer the recording to the dialog management system where it is stored in a local memory by the auditory icon management unit, and specify that this sound chunk be played whenever an application for providing sports news reports an update about a Formula One race. The user might also advantageously use the microphone of the dialog management system to record a suitable sound chunk. In a preferred embodiment of the invention, the dialog management system is equipped with a suitable interface for connection to a portable memory such as a USB stick, memory card etc., or to any external network such as the internet, for the purpose of locating and downloading sound chunks for use as auditory icons.

As already indicated, the dialog management system is able to provide an application with any auditory icons which it might require. For example, it might be that an application only disposes of one or two auditory icons, for example to indicate the start of a process, or to indicate that an error has occurred, requiring the attention of the user. However, such a small selection might not be sufficient for an intuitive and easily understood dialog flow between the user and the application. In this case, the dialog management system might choose a set of suitable auditory icons from a selection available, and assign these to the application. In another example, on loading a new application, the dialog management system examines the auditory icons associated with the new application, and compares them to the auditory icons already assigned to the other applications. If any of the new auditory icons is identical or very similar to any existing auditory icon, the dialog management system preferably informs the user, and suggests suitable alternatives if it has any available. If no suitable alternative auditory icons are available, the dialog management system might prompt the user to enter suitable replacements.

Examples of auditory icons which an application might use to provide audible feedback to the user are start auditory icons, to be played when a dialog flow between the user and the application is activated or reactivated from stand-by, and end auditory icons, to be played when the dialog flow between the user and the application is concluded, deactivated, or placed in a stand-by mode. The start auditory icon itself should reflect the nature of the application, while the end auditory icon might simply be the sounds of the start icon, played in reverse order. An application might also use informative auditory icons, whose sound contains some clue as to the nature of the application or the actual feedback type associated with this auditory icon. For example an application for supplying weather forecast updates might play an auditory icon with weather-associated sounds such as wind for stormy weather, raindrops for rainy weather and birdsong for fair weather. Other examples of auditory icons might be those used to provide status or information updates during the time that an application is active. For example, an application running a personal digital assistant might have several auditory icons for supplying the user with different types of status feedback concerning appointments, incoming emails, due-dates for reports, etc. For example, the personal digital assistant might repeatedly remind the user of an upcoming appointment using an appropriate audible icon, with the reminders becoming more and more persistent as the appointment draws near.

In a preferred embodiment of the invention, the user might specify which audible icons of which applications he would like to hear during a dialog flow, by entering suitable information into a user profile. He might also specify the loudness of the auditory icons, and the number of times an auditory icon is to be played during the dialog flow. In addition, he can assign priorities to the various applications, so that feedback from an intercom takes priority over an application such as a personal digital assistant. In this way, the user ensures that he will always be informed of the higher-priority application in the event that higher- and lower-priority applications simultaneously report feedback in the dialog flow. The user profile can be consulted regularly or after every modification by the auditory icon management unit to determine whether an auditory icon should be played back, the desired loudness, and the number of times this auditory icon can be played back during this dialog flow.

In a further preferred embodiment, the dialog management system can deduce user preferences by interpreting dialog flow. For example, if an application has reported a reminder for an upcoming appointment by means of an appropriate auditory icon, and the user replies "I know, I know", the dialog management system can interpret this to mean that the user does not need reminding again, and might suppress the auditory icon for this feedback the next time it is initiated by the application. This level of "intelligent" interpretation on the part of the dialog management system might also be specified by the user in the user profile. For a dialog management system used by more than one user, a number of user profiles can preferably be configured, so that each user has his own private user profile in which he can specify his own personal preferences.

A dialog management system according to the present invention might perform some of the processing steps described above by implementing software modules or a computer program product. Such a computer program product might be directly loadable into the memory of a programmable dialog management system. Some of the units or modules such as the core dialog engine, application interface unit and auditory icon management unit can thereby be realised in the form of computer program modules. Since any required software or algorithms might be encoded on a processor of a hardware device, an existing electronic device might easily be adapted to benefit from the features of the invention. Alternatively, the units or blocks for processing user input and the output prompts in the manner described can equally be realised using hardware modules.

Other objects and features of the present invention will become apparent from the following detailed descriptions considered in conjunction with the accompanying drawing. It is to be understood, however, that the drawing is designed solely for the purposes of illustration and not as a definition of the limits of the invention, for which reference should be made to the appended claims.

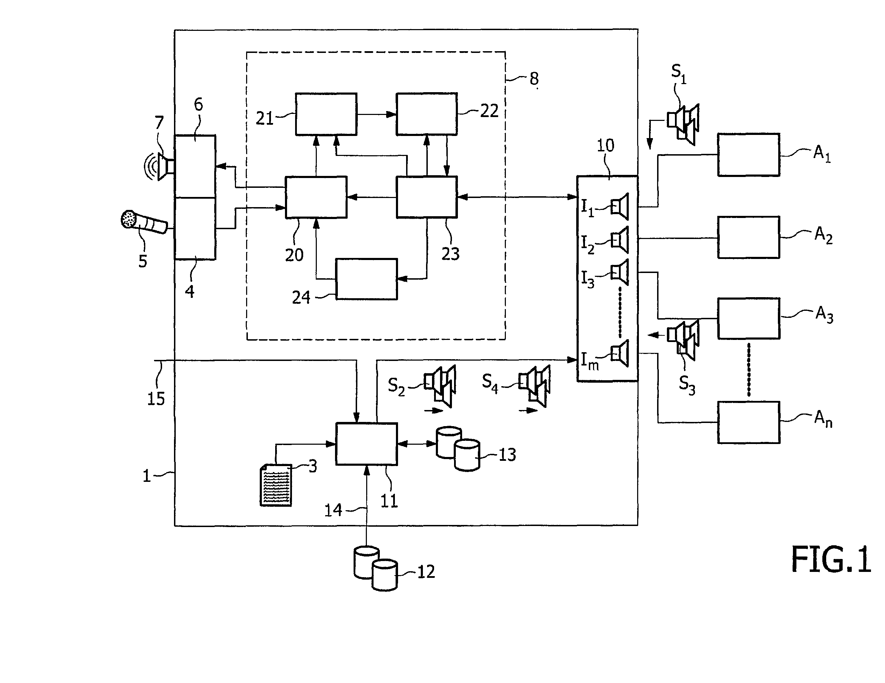

The sole figure, Fig.1, is a schematic block diagram of a dialog management system in accordance with an embodiment of the present invention.

In the description of the figure, which does not exclude other possible realisations of the invention, the system is shown as part of a user device, for example a home dialog system. For the sake of clarity, the interface between the user and the present invention has not been included in the diagram.
Fig. 1 shows a dialog management system 1 with a number of interfaces for communicating with multiple external applications A₁, A₂, A₃, ..., Aₙ. The applications A₁, A₂, A₃, ..., Aₙ, shown in a simplified manner as blocks, can in reality be any kind of "application" or "function" about which a user would like to be informed, or which a user would like to control in some way. In this example, the applications A₁, A₂, A₃, ..., Aₙ might include, among others, a personal digital assistant A₁, a news and weather service A₂, and a telephone A₃.

The dialog management system 1 features an application interface 10 for handling incoming and outgoing information passed between the dialog management system 1 and the applications A₁, A₂, A₃, ..., Aₙ. Furthermore, the dialog management system 1 can obtain information from each application A₁, A₂, A₃, ..., Aₙ regarding any auditory icons it might feature, and when these auditory icons should be played. This information is stored in an auditory icon management unit 11. In this example, one of the applications A₁ might automatically provide the dialog management system 1 with all relevant information concerning its set of auditory icons, for example when the application A₁ is started or booted. Another application A₃ might only submit descriptive information regarding its auditory icons in advance, and submit a single auditory icon upon request in the event that the auditory icon is actually required in the dialog flow. The dialog management system 1 can request an application A₁, A₂, A₃, ..., Aₙ to provide information regarding one or more auditory icons as required, or when the application A₁, A₂, A₃, ..., Aₙ is started.

Not all applications will have a complete set of suitable auditory icons at its disposal. Some applications may not have any auditory icons at all, and some applications might even have identical auditory icons. To deal with such situations, the auditory icon management unit 11 can assign auditory icons to an application A₂ by choosing suitable ones from a collection of pre-defined auditory icons 13. For such an application, the user might prefer to have the auditory icon management unit 11 assign a particular sound recording to the application A₂. For example, the user might like to hear the sound of birdsong when the weather service A₂ reports fair weather. If stormy weather is forecast, the user might like to hear the sound of thunder. The user can input these recordings as audio data in a suitable format via a user interface 15, and have the auditory icon management unit 11 assign them to the weather service application A₂. Another way of supplying the auditory icon management unit 11 with such recordings is to download them from an external computer or a network 12 such as the internet, via a suitable interface 14.

These different ways of obtaining auditory icon information allow the dialog management system 1 to collect all the information it requires in order to playback the relevant auditory icons as required in the dialog flow.

The dialog flow in this example consists of communication between the user, not shown in the diagram, and the various applications A₁, A₂, A₃, ..., Aₙ driven by the dialog management system 1. The user issues spoken commands or requests to the dialog management system 1 through a microphone 5. The spoken commands or requests are recorded and digitised in an input detection arrangement 4, which passes the recorded speech input to a core dialog engine 8. This engine 8 comprises several blocks for performing the usual steps involved in speech recognition - an audio interface block 20 performs some necessary digital signal processing on the input speech signal before forwarding it to an automatic speech recogniser 21. This extracts any recognisable speech components from the input audio signal and forwards these to a language understanding block 22. In the language understanding block 22, the spoken commands or requests of the user are analysed for relevance and passed on as appropriate to the dialog controller 23, which converts the user input into commands or requests that can be executed by the appropriate application A₁, A₂, A₃, ..., Aₙ.

Should it be necessary to obtain some further information from the user, for example if the spoken commands can not be parsed or understood by the automatic speech recogniser 21 and language understanding 22 blocks, or if the spoken commands cannot be applied to any of the applications A₁, A₂, A₃, ..., Aₙ that are active, the dialog controller 23 generates appropriate requests and forwards these to a speech generator 24 where they are synthesized to speech. The audio interface block 20 performs the necessary digital signal processing on the output speech signal which is then converted in an sound output arrangement 6 such as a loudspeaker to give audible sound 7.

In a typical example of a dialog flow controlled by the dialog management system of Fig. 1, the user might wish to enter an appointment into the diary of his personal digital assistant A₁. All he needs to do is to say "Enter appointment with tax advisor next Monday at 11am". The core dialog engine 8 converts the command into the appropriate form and submits it to the personal digital assistant application A₁. If the appointment can be entered without any problem into the personal digital assistant A₁, the appropriate feedback is reported to the dialog management system 1, which chooses the appropriate confirmatory feedback - such as a spoken "OK" or "Roger" - to be output.

If an appointment is already scheduled for the same time on that day, the personal digital assistant A₁ reports back to the dialog management system 1, where the application interface 10 and/or the dialog controller 23 interprets the application's response, and chooses the appropriate auditory icon - for example the sound of clashing cymbals to indicate to the user that the new appointment clashes with an appointment already entered. Additionally, the dialog controller 23 triggers generation of a suitable prompt, e.g. "You already have an appointment at 11am with Mr. So-and-so". Optionally, the user may deactivate the prompt output if detailed feedback is not desired by the user.

In this example, the user has specified his preferences regarding the playback of auditory icons in a user profile, to customise or configure the extent to which he would like to be informed about events occurring in the applications he uses, and which applications are to be accorded a higher priority in the dialog flow. These preferences might endure until changed at some later time by the user, or they might be of a transitory nature. For example, the user might tell the dialog management system how to react within a certain period of time. For example, when the user says "Don't interrupt me for the next two hours unless it's really important", the dialog management system suppresses the reporting of minor events occurring during the following two hours, such as an automatic weather update, and postpones for two hours all relatively unimportant events such as 24-hour reminders for upcoming scheduled appointments "Dentist tomorrow afternoon at 3pm". The user would only be interrupted by a relatively important event such as a scheduled appointment during the specified time "Meeting with director in 15 minutes" or a telephone call from an client tagged in the telephone application A₃ as being important. The dialog management system decides what is important and what is relatively unimportant by examining the information specified in the user profile 3.

Other preferences might specify the priority given to the applications if two or more applications indicate that auditory icons are to the played at the same time. In this case, the user has specified in the user profile 13 that the telephone A₃ is to be assigned a higher priority than the news and weather service A₂. If the news and weather service A₂ is about to give its automatic news update, and an incoming call arrives at the same time, the application interface 10 acknowledges that the telephone application A₃ has the higher priority, and suppresses the auditory icon of the news and weather service A₂, which may be postponed for output at a later point in time.

Although the present invention has been disclosed in the form of preferred embodiments and variations thereon, it will be understood that numerous additional modifications and variations could be made thereto without departing from the scope of the invention, for example the auditory icon management unit might be realised as part of the core dialog engine, or be incorporated in another module such as the dialog controller. In one embodiment of the invention, the dialog system might be able to determine the quality of the current user's voice after processing a few utterances, or the user might make himself known to the system by entering an identification code which might then be used to access stored user profile information which in turn would be used to generate appropriate control parameters for the audio interface.

For the sake of clarity, throughout this application, it is to be understood that the use of "a" or "an" does not exclude a plurality, and "comprising" does not exclude other steps or elements. The use of "unit" or "module" does not limit realisation to a single unit or module.

## Claims

1. A method for driving multiple applications (A₁, A₂, A₃, ..., Aₙ) by a common dialog management system (1) wherein
- a unique set of auditory icons (S₁, S₂, S₃, ..., Sₙ) is assigned to each application (A₁, A₂, A₃, ..., Aₙ),
- and wherein the common dialog management system (1) informs a user of the status of an application (A₁, A₂, A₃, ..., Aₙ) by playback, at a specific point in a dialog flow, of a relevant auditory icon (I₁, I₂, I₃, ..., Iₙ) selected from the unique set of auditory icons (S₁, S₂, S₃, ..., Sₙ) of the respective application (A₁, A₂, A₃, ..., Aₙ);
and wherein
- an application (A₁, A₂, A₃, ..., Aₙ) submits a set of auditory icons (S₁, S₂, S₃, ..., Sₙ) and associated instructions concerning the use thereof to the dialog management system (1);
- the dialog management system (1) supplies an application (A₁, A₂, A₃, ..., Aₙ) with a unique set of auditory icons (S₁, S₂, S₃, ..., Sₙ) by modifying non-unique auditory icons (I₁, I₂, I₃, ..., Iₙ) in a set of auditory icons (S₁, S₂, S₃, ..., Sₙ) of the application (A₁, A₂, A₃, ..., Aₙ) and/or choosing unique auditory icons (I₁, I₂, I₃, ..., Iₙ) for the application (A₁, A₂, A₃, ..., Aₙ) from a collection (13) of auditory icons.

2. A method according to claim 1, wherein the auditory icons (I₁, I₂, I₃, ..., Iₙ) of an application (A₁, A₂, A₃, ..., Aₙ) are played back to indicate to the user a change in operational status of an application (A₁, A₂, A₃, ..., Aₙ).

3. A method according to claim 3, wherein identifying information for the individual auditory icons (I₁, I₂, I₃, ..., Iₙ) of an application (A₁, A₂, A₃, ..., Aₙ) and associated instructions are obtained by the dialog management system (1), and the auditory icons (I₁, I₂, I₃, ..., Iₙ) are retrieved by the dialog management system (1), from the application (A₁, A₂, A₃, ..., Aₙ) upon request.

4. A method according to claim 3, wherein the complete set of auditory icons (S₁, S₂, S₃, ..., Sₙ) of an application (A₁, A₂, A₃, ..., Aₙ) is acquired by the dialog management system (1) at the outset of a dialog flow between the user and the application (A₁, A₂, A₃, ..., Aₙ) or upon activation or installation of the application (A₁, A₂, A₃, ..., Aₙ).

5. A method according to any of the preceding claims, wherein the set of auditory icons (S₁, S₂, S₃, ..., Sₙ) for playback in a dialog flow between a user and an application (A₁, A₂, A₃, ..., Aₙ) comprises at least one unique start auditory icon, for playback at commencement of the dialog flow and/or at least one unique end auditory icon, for playback at conclusion of a dialog flow.

6. A method according to any of the preceding claims, wherein the set of auditory icons (S₁, S₂, S₃, ..., Sₙ) for playback in a dialog flow between a user and an application (A₁, A₂, A₃, ..., Aₙ) comprises a number of unique informative auditory icons (I₁, I₂, I₃, ..., Iₙ), for playback at specific points during the dialog flow where each auditory icon (I₁, I₂, I₃, ..., Iₙ) describes a particular type of feedback from the application (A₁, A₂, A₃, ..., Aₙ).

7. A method according to any of the preceding claims, wherein auditory icons (I₁, I₂, I₃, ..., Iₙ) and/or playback characteristics of the auditory icons (I₁, I₂, I₃, ..., Iₙ) are specified for a user in a user profile (3).

8. A dialog management system (1) for driving a number of applications (A₁, A₂, A₃, ..., Aₙ), comprising
- an input detection arrangement (4) for detecting user input (5) to the system;
- a sound output arrangement (6) for outputting an audible prompt (7) ;
- a core dialog engine (8) for coordinating a dialog flow by interpreting user input (5) and generating output prompts;
- an application interface (10) for communication between the dialog management system (1) and the applications (A₁, A₂, A₃, ..., Aₙ);
- a source of unique sets of auditory icons (S₁, S₂, S₃, ..., Sₙ) assigned to the applications (A₁, A₂, A₃, ..., Aₙ);
- and an auditory icon management unit (11) for selecting relevant auditory icons (I₁, I₂, I₃, ..., Iₙ) from the unique sets of auditory icons (S₁, S₂, S₃, ..., Sₙ) corresponding to the applications (A₁, A₂, A₃, ..., Aₙ) for playback at specific points in the dialog flow;
which dialog management system (1) is realised to obtain a set of auditory icons (S₁, S₂, S₃, ..., Sₙ) and associated instructions concerning the use thereof from an application (A₁, A₂, A₃, ..., Aₙ) and to supply an application (A₁, A₂, A₃, ..., Aₙ) with a unique set of auditory icons (S₁, S₂, S₃, ..., Sₙ) by modifying non-unique auditory icons (I₁, I₂, I₃, ..., Iₙ) in a set of auditory icons (S₁, S₂, S₃, ..., Sₙ) of the application (A₁, A₂, A₃, ..., Aₙ) and/or by choosing unique auditory icons (I₁, I₂, I₃, ..., Iₙ) for the application (A₁, A₂, A₃, ..., Aₙ) from a collection (13) of auditory icons.

9. A dialog management system (1) according to claim 8, comprising a means (15) for allowing the user to input auditory icons (I₁, I₂, I₃, ..., Iₙ).

10. A dialog management system (1) according to claim 8 or claim 9, comprising an interface (14) for obtaining sets of auditory icons (S₁, S₂, S₃, ..., Sₙ) or individual auditory icons (I₁, I₂, I₃, ..., Iₙ) from an external source (12)

11. A computer program product directly loadable into the memory of a programmable dialog management system (1) comprising software code portions for performing the steps of a method according to claims 1 to 7 when said product is run on the dialog management system (1).

## Patentansprüche

1. Verfahren zum Ansteuern mehrerer Anwendungen (A₁, A₂, A₃,..., Aₙ) durch ein gemeinsames Dialogverwaltungssystem (1), wobei
- jeder Anwendung (A₁, A₂, A₃,..., Aₙ) ein eindeutiger Satz mit akustischen Symbolen (engl. akusty icons) (S₁, S₂, S₃,..., Sₙ) zugeordnet wird,
- und wobei das gemeinsame Dialogverwaltungssystem (1) den Benutzer über den Status einer Anwendung (A₁, A₂, A₃,..., Aₙ) an einem bestimmten Punkt in einem Dialogfluss durch Wiedergabe eines betreffenden akustischen Symbols (I₁, 1₂, I₃,..., Iₙ) informiert, das aus dem eindeutigen Satz mit akustischen Symbolen (S₁, S₂, S₃,..., Sₙ) der betreffenden Anwendung (A₁, A₂, A₃,..., Aₙ) ausgewählt wird, und wobei
- eine Anwendung (A₁, A₂, A₃,..., Aₙ) dem Dialogverwaltungssystem (1) einen Satz mit akustischen Symbolen (S_{1,} S₂, S₃,..., Sₙ) und dazu gehörende Anweisungen bezüglich deren Einsatz liefert,
- das Dialogverwaltungssystem (1) einer Anwendung (A₁, A₂, A₃,..., Aₙ) einen eindeutigen Satz mit akustischen Symbolen (S₁, S₂, S₃,..., Sₙ) zuführt, indem es nicht eindeutige akustische Symbole (I₁, I₂, I₃,..., Iₙ) in einem Satz mit akustischen Symbolen (S₁, S₂, S₃,..., Sₙ) der Anwendung (A₁, A₂, A₃,..., Aₙ) verändert und/oder eindeutige akustische Symbole (I₁, I₂, I₃,..., Iₙ) für die Anwendung (A₁, A₂, A₃,..., Aₙ) aus einer Sammlung (13) mit akustischen Symbolen auswählt.

2. Verfahren nach Anspruch 1, wobei die akustischen Symbole (I₁, I₂, I₃,..., Iₙ) einer Anwendung (A₁, A₂, A₃,..., Aₙ) wiedergegeben werden, um dem Benutzer eine Änderung des Betriebsstatus einer Anwendung (A₁, A₂, A₃,..., Aₙ) anzuzeigen.

3. Verfahren nach Anspruch 2, wobei die Identifizierungsinformationen für die einzelnen akustischen Symbole (I₁, I₂, I₃,..., Iₙ) einer Anwendung (A₁, A₂, A₃,..., Aₙ) und die dazu gehörenden Anweisungen durch das Dialogverwaltungssystem (1) erhalten werden und die akustischen Symbole (I₁, I₂, I₃,..., Iₙ) von dem Dialogverwaltungssystem (1) von der Anwendung (A₁, A₂, A₃,..., Aₙ) auf Anfrage abgerufen werden.

4. Verfahren nach Anspruch 3, wobei der komplette Satz mit akustischen Symbolen (S_{1,} S₂, S₃,..., Sₙ) einer Anwendung (A₁, A₂, A₃,..., Aₙ) von dem Dialogverwaltungssystem (1) zu Beginn eines Dialogflusses zwischen dem Benutzer und der Anwendung (A₁, A₂, A₃,..., Aₙ) oder nach Aktivierung oder Installation der Anwendung (A₁, A₂, A₃,..., Aₙ) erfasst wird.

5. Verfahren nach einem der vorhergehenden Ansprüche, wobei der Satz mit akustischen Symbolen (S₁, S₂, S₃,..., Sₙ) zur Wiedergabe in einem Dialogfluss zwischen einem Benutzer und einer Anwendung (A₁, A₂, A₃,..., Aₙ) mindestens ein eindeutiges akustisches Startsymbol zur Wiedergabe am Anfang des Dialogflusses und/oder mindestens ein eindeutiges akustisches Endsymbol zur Wiedergabe am Ende eines Dialogflusses umfasst.

6. Verfahren nach einem der vorhergehenden Ansprüche, wobei der Satz mit akustischen Symbolen (S₁, S₂, S₃,..., Sₙ) zur Wiedergabe in einem Dialogfluss zwischen einem Benutzer und einer Anwendung (A₁, A₂, A₃,..., Aₙ) eine Anzahl von eindeutigen informativen akustischen Symbolen (I₁, I₂, I₃,..., Iₙ) zur Wiedergabe an bestimmten Punkten während des Dialogflusses umfasst, wobei jedes akustische Symbol (I₁, I₂, I₃,..., Iₙ) eine spezielle Art des Feedbacks von der Anwendung (A₁, A₂, A₃,..., Aₙ) beschreibt.

7. Verfahren nach einem der vorhergehenden Ansprüche, wobei akustische Symbole (I₁, I₂, I₃,..., Iₙ) und/oder Wiedergabemerkmale der akustischen Symbole (I₁, I₂, I₃,..., Iₙ) für einen Benutzer in einem Benutzerprofil (3) spezifiziert werden.

8. Dialogverwaltungssystem (1) zum Ansteuern einer Anzahl von Anwendungen (A₁, A₂, A₃,..., Aₙ), das Folgendes umfasst:
- eine Eingabeerkennungsanordnung (4) zum Erkennen einer Benutzereingabe (5) in das System,
- eine Tonausgabeanordnung (6) zum Ausgeben einer akustischen Aufforderung (7),
- eine Kerndialogmaschine (8) zum Koordinieren eines Dialogflusses durch Interpretation der Benutzereingabe (5) und Erzeugung von Ausgabeaufforderungen,
- eine Anwendungsschnittstelle (10) für die Kommunikation zwischen dem Dialogverwaltungssystem (1) und den Anwendungen (A₁, A₂, A₃,..., Aₙ),
- eine Quelle eindeutiger Sätze mit akustischen Symbolen (S₁, S₂, S₃,..., Sₙ), die den Anwendungen (A₁, A₂, A₃,..., Aₙ) zugeordnet sind,
- und eine Verwaltungseinheit (11) für akustische Symbole zum Auswählen der betreffenden akustischen Symbole (I₁, I₂, I₃,..., Iₙ) aus den eindeutigen Sätzen mit akustischen Symbolen (S_{1,} S₂, S₃,..., Sₙ), die den Anwendungen (A₁, A₂, A₃,..., Aₙ) entsprechen, zur Wiedergabe an bestimmten Punkten im Dialogfluss,
wobei das Dialogverwaltungssystem (1) so ausgelegt ist, dass es einen Satz mit akustischen Symbolen (S_{1,} S₂, S₃,..., Sₙ) und dazu gehörende Anweisungen bezüglich deren Einsatz von einer Anwendung (A₁, A₂, A₃,..., Aₙ) erhält und einer Anwendung (A₁, A₂, A₃,..., Aₙ) einen eindeutigen Satz mit akustischen Symbolen (S₁, S₂, S₃,..., Sₙ) zuführt, indem es nicht eindeutigen akustische Symbole (I₁, I₂, I₃,..., Iₙ) in einem Satz mit akustischen Symbolen (S₁, S₂, S₃,..., Sₙ) der Anwendung (A₁, A₂, A₃,..., Aₙ) verändert und/oder eindeutige akustische Symbole (I₁, I₂, I₃,..., Iₙ) für die Anwendung (A₁, A₂, A₃,..., Aₙ) aus einer Sammlung (13) mit akustischen Symbolen auswählt.

9. Dialogverwaltungssystem (1) nach Anspruch 8, das Mittel (15) zum Zulassen der Eingabe akustischer Symbole (I₁, I₂, I₃,..., Iₙ) durch den Benutzer umfasst.

10. Dialogverwaltungssystem (1) nach Anspruch 8 oder 9, das eine Schnittstelle (14) zum Erhalten von Sätzen mit akustischen Symbolen (S₁, S₂, S₃,..., Sₙ) oder einzelner akustischer Symbole (I₁, I₂, I₃,..., Iₙ) von einer externen Quelle (12) umfasst.

11. Computerprogrammprodukt, das direkt in den Speicher eines programmierbaren Dialogverwaltungssystems (1) geladen werden kann und Softwarecodeteile zum Durchführen der Schritte eines Verfahrens nach den Ansprüchen 1 bis 7 umfasst, wenn das genannte Produkt in dem Dialogverwaltungssystem (1) betrieben wird.

## Revendications

1. Procédé servant à commander des applications multiples (A₁, A₂, A₃, ..., Aₙ) par un système de gestion de dialogue commun (1), dans lequel
- un ensemble unique d'icônes auditives (S₁, S₂, S₃, ..., Sₙ) est affecté à chaque application (A₁, A₂, A₃, ..., Aₙ),
- et dans lequel le système de gestion de dialogue commun (1) informe un utilisateur du statut d'une application (A₁, A₂, A₃, ..., Aₙ) par lecture, à un point spécifique dans un flux de dialogue, d'une icône auditive pertinente (I₁, I₂, I₃, ..., Iₙ) sélectionnée dans l'ensemble unique d'icônes auditives (S₁, S₂, S₃, ..., Sₙ) de l'application respective (A₁, A₂, A₃, ..., Aₙ) ;
et dans lequel
- une application (A₁, A₂, A₃, ..., Aₙ) soumet un ensemble d'icônes auditives (S₁, S₂, S₃, ..., Sₙ) et des instructions associées concernant leur utilisation au système de gestion de dialogue (1) ;
- le système de gestion de dialogue (1) fournit à une application (A₁, A₂, A₃, ..., Aₙ) un ensemble unique d'icônes auditives (S₁, S₂, S₃, ..., Sₙ) en modifiant des icônes auditives non uniques (I₁, I₂, I₃, ..., Iₙ) dans un ensemble d'icônes auditives (S₁, S₂, S₃, ..., Sₙ) de l'application (A₁, A₂, A₃, ..., Aₙ) et/ou en choisissant des icônes auditives uniques (I₁, I₂, I₃, ..., Iₙ) pour l'application (A₁, A₂, A₃, ..., Aₙ) dans une collection (13) d'icônes auditives.

2. Procédé selon la revendication 1, dans lequel les icônes auditives (I₁, I₂, I₃, ..., Iₙ) d'une application (A₁, A₂, A₃, ..., Aₙ) sont lues pour indiquer à l'utilisateur un changement du statut opérationnel d'une application (A₁, A₂, A₃, ..., Aₙ).

3. Procédé selon la revendication 2, dans lequel les informations d'identification des icônes auditives individuelles (I₁, I₂, I₃, ..., Iₙ) d'une application (A₁, A₂, A₃, ..., Aₙ) et les instructions associées sont obtenues par le système de gestion de dialogue (1), et les icônes auditives (I₁, I₂, I₃, ..., Iₙ) sont extraites par le système de gestion de dialogue (1), de l'application (A₁, A₂, A₃, ..., Aₙ) sur demande.

4. Procédé selon la revendication 3, dans lequel l'ensemble complet d'icônes auditives (S₁, S₂, S₃, ..., Sₙ) d'une application (A₁, A₂, A₃, ..., Aₙ) est acquis par le système de gestion de dialogue (1) dès le début d'un flux de dialogue entre l'utilisateur et l'application (A₁, A₂, A₃, ..., Aₙ) ou à l'activation ou l'installation de l'application (A₁, A₂, A₃, ..., Aₙ).

5. Procédé selon l'une quelconque des revendications précédentes, dans lequel l'ensemble d'icônes auditives (S₁, S₂, S₃, ..., Sₙ) à lire dans un flux de dialogue entre un utilisateur et une application (A₁, A₂, A₃, ..., Aₙ) comprend au moins une icône auditive de début unique, à lire au commencement du flux de dialogue et/ou au moins une icône auditive de fin unique à lire à la conclusion d'un flux de dialogue.

6. Procédé selon l'une quelconque des revendications précédentes, dans lequel l'ensemble d'icônes auditives (S₁, S₂, S₃, ..., Sₙ) à lire dans un flux de dialogue entre un utilisateur et une application (A₁, A₂, A₃, ..., Aₙ) comprend un certain nombre d'icônes auditives informatives uniques (I₁, I₂, I₃, ..., Iₙ), à lire à des points spécifiques au cours du flux de dialogue où chaque icône auditive (I₁, I₂, I₃, ..., Iₙ) décrit un type particulier de rétroaction de l'application (A₁, A₂, A₃, ..., Aₙ).

7. Procédé selon l'une quelconque des revendications précédentes, dans lequel des icônes auditives (I₁, I₂, I₃, ..., Iₙ) et/ou des caractéristiques de lecture des icônes auditives (I₁, I₂, I₃, ..., Iₙ) sont spécifiées pour un utilisateur dans un profil d'utilisateur (3).

8. Système de gestion de dialogue (1) pour commander un certain nombre d'applications (A₁, A₂, A₃, ..., Aₙ) comprenant :
- un agencement de détection d'entrée (4) pour détecter une entrée d'utilisateur (5) dans le système ;
- un agencement de sortie de son (6) pour délivrer une invite audible (7) ;
- un moteur de dialogue de coeur (8) pour coordonner un flux de dialogue en interprétant l'entrée d'utilisateur (5) et en générant des invites de sortie ;
- une interface d'application (10) pour la communication entre le système de gestion de dialogue et les applications (A₁, A₂, A₃, ..., Aₙ) ;
- une source d'ensembles uniques d'icônes auditives (S₁, S₂, S₃, ..., Sₙ) affectées aux applications (A₁, A₂, A₃, ..., Aₙ) ;
- et une unité de gestion d'icônes auditives (11) pour sélectionner des icônes auditives pertinentes (I₁, I₂, I₃, ..., Iₙ) dans les ensembles uniques d'icônes auditives (S₁, S₂, S₃, ..., Sₙ) correspondant aux applications (A₁, A₂, A₃, ..., Aₙ) à lire à des points spécifiques dans le flux de dialogue ;
lequel système de gestion de dialogue (1) est réalisé pour obtenir un ensemble d'icônes auditives (S₁, S₂, S₃, ..., Sₙ) et des instructions associées concernant leur utilisation à partir d'une application (A₁, A₂, A₃, ..., Aₙ) et pour fournir à une application (A₁, A₂, A₃, ..., Aₙ) un ensemble unique d'icônes auditives (S₁, S₂, S₃, ..., Sₙ)en modifiant des icônes auditives non uniques (I₁, I₂, I₃, ..., Iₙ) dans un ensemble d'icônes auditives (S₁, S₂, S₃, ..., Sₙ) de l'application (A₁, A₂, A₃, ..., Aₙ) et/ou en choisissant des icônes auditives uniques (I₁, I₂, I₃, ..., Iₙ) pour l'application (A₁, A₂, A₃, ..., Aₙ) dans une collection (13) d'icônes auditives.

9. Système de gestion de dialogue (1) selon la revendication 8, comprenant un moyen (15) pour permettre à l'utilisateur d'entrer des icônes auditives (I₁, I₂, I₃, ..., Iₙ).

10. Système de gestion de dialogue (1) selon la revendication 8 ou la revendication 9, comprenant une interface (14) pour obtenir des ensembles d'icônes auditives (S₁, S₂, S₃, ..., Sₙ) ou des icônes auditives individuelles (I₁, I₂, I₃, ..., Iₙ) à partir d'une source externe (12).

11. Produits de programme informatique chargeable directement dans la mémoire d'un système de gestion de dialogue programmable (1) comprenant des portions de code logiciel pour effectuer les étapes d'un procédé selon les revendications 1 à 7 lorsque ledit produit est exécuté sur le système de gestion de dialogue (1).
